# EUROPÄISCHE PATENTANMELDUNG

(11) **EP 1 179 794 A1**
(43) Veröffentlichungstag der Anmeldung: **13.02.2002**
(21) Anmeldenummer: 00117489.5
(22) Anmeldetag: 11.08.2000
(51) Int. Cl.: G06F 17/60

(54) **Verfahren zur Bearbeitung von Anfragen**

(71) Anmelder: SIEMENS AKTIENGESELLSCHAFT, 80333 München (DE)
(72) Erfinder: Bellmann, Matthias, Dr., 82057 Icking (DE)

(57) **Zusammenfassung**

Zur Bearbeitung von Anfragen von Kunden, Kooperationspartnern, Mitarbeitern oder anderen Personen an Institutionen mit einer Vielzahl von für die Bearbeitung solcher Anfragen potentiell zuständigen Bearbeitern wird ein Verfahren vorgeschlagen, bei dem ankommende Anfragen, sofern sie nicht bereits in digitaler Form als E-Mail oder elektronisch gespeicherter Text vorliegen, digitalisiert und in digitaler Form gespeichert und diese in digitaler Form gespeicherten Anfragen in Form einer elektronischen Datenbank möglichen Bearbeitern solcher Anfragen über ein Netz zur Verfügung gestellt werden.

## Beschreibung

Die Erfindung betrifft ein Verfahren zur Bearbeitung von Anfragen von Kunden, Kooperationspartnern, Mitarbeitern oder anderen Personen an Institutionen mit einer Vielzahl von für die Bearbeitung solcher Anfragen potentiell zuständigen Bearbeitern.

Zur Kommunikation mit Kunden, Kooperationspartnern, Mitarbeitern oder anderen Personen bedienen sich kommerzielle Unternehmen, Behörden, Verbände und andere Institutionen mit einer Vielzahl von für die Bearbeitung solcher Anfragen potentiell zuständigen Bearbeitern heute üblicherweise sogenannter Call-Center. Diese haben den Vorteil, den Bedürfnissen solcher Personen besonders entgegen zu kommen, die Wert auf einen menschlichen Gesprächspartner legen. Die Erfahrung zeigt aber, daß eine schriftliche Kommunikation in vielen Fällen angemessener und wirkungsvoller ist als das persönliche Gespräch, weil diese zeitversetzt stattfinden kann und die Darstellung komplizierterer Sachverhalte oftmals erleichtert.

Gerade in solchen Fällen, in denen die Zuständigkeitsfrage innerhalb der Institution erst bei Vorliegen der Anfrage zu klären ist, ist eine telefonische Kommunikation oftmals zeitraubend und ineffizient. Der Nachteil schriftlicher Kommunikation ist häufig, daß schriftliche Anfragen oftmals lange unbearbeitet bleiben und ihr Weg durch die Institution in manchen Fällen nur schwer zu rekonstruieren ist. Unzufriedenheit der Kunden oder verlorene Geschäftsmöglichkeiten sind die für kommerzielle Unternehmen oft schmerzliche Folgen.

Die Erfindung strebt an, eine technische Lehre zur Verbesserung dieser Situation anzugeben. Diese Aufgabe wird durch ein Verfahren gemäß dem Patentanspruch 1 gelöst. Vorteilhafte Weiterbildungen der Erfindung sind Gegenstand untergeordneter Ansprüche.

Im folgenden wird die Erfindung anhand bevorzugter Ausführungsbeispiele und mit Hilfe der Figuren näher beschrieben.

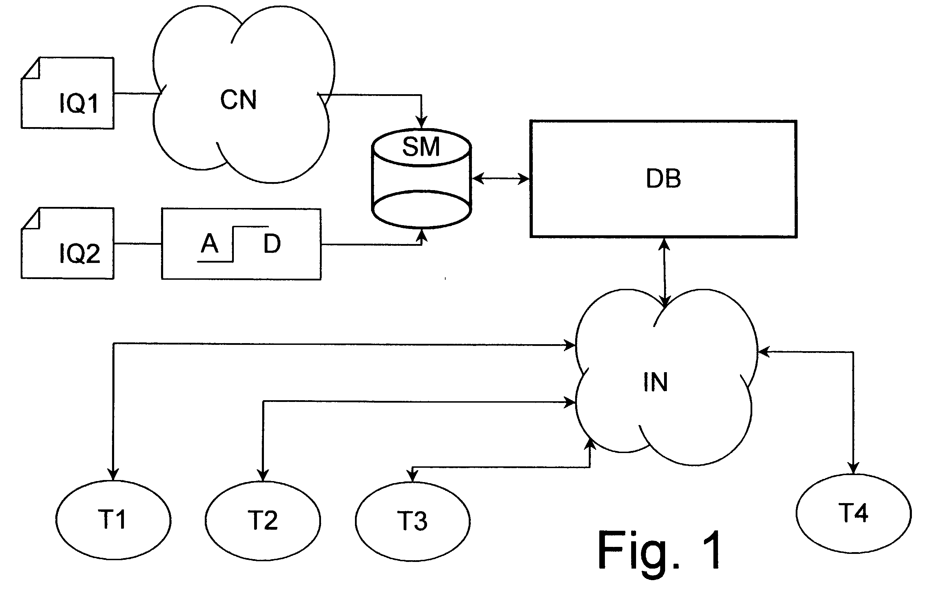

Figur 1 zeigt eine schematische Darstellung eines bevorzugten Ausführungsbeispiels des erfindungsgemäßen Verfahrens.

Anfragen (IQ1) bzw. (IQ2) erreichen ein elektronisches Speichermedium SM über ein Kommunikationsnetz (CN), also z.B. als E-Mail über das Internet, oder kommen z.B. als Papierdokumente (IQ2) herein und werden von einem A/D-Wandler, wie z.B. einem Scanner (AD), digitalisiert und anschließend auf dem elektronischen Speichermedium (SM) gespeichert. Die auf dem elektronischen Speichermedium (SM) gespeicherten Anfragen werden in eine elektronische Datenbank (DB) aufgenommen und über ein Netz (IN) möglichen Bearbeitern zur Verfügung gestellt.

Vorzugsweise geschieht dies, indem die in digitaler Form gespeicherten Anfragen in HTML-Dokumente umgewandelt und in eine Intranet-Datenbank integriert werden. In dieser Datenbank werden die Anfragen zusammen mit anderen Informationen, wie z.B. dem Bearbeitungszustand der Anfrage, ihrer Bearbeitungshistorie, oder zusammen mit Informationen über Zuständigkeiten bei der Bearbeitung, auftretende Probleme und ähnlichen Informationen gespeichert.

Bei jedem Bearbeitungsschritt kann der geänderte Bearbeitungszustand oder die Zuständigkeit für die weitere Bearbeitung geändert werden. Auf diese Weise ist es auch einem geographisch verteilten Team von Bearbeitern möglich, effizient an der Bearbeitung von Anfragen zusammenzuarbeiten, wodurch die Bearbeitungszeit für den Anfragenden deutlich reduziert wird. Ein Vorgesetzter oder anderweitig privilegierter Bearbeiter kann durch statistische Abfragen den Status der Bearbeitung laufend überwachen und falls notwendig steuernd eingreifen.

Ab einer bestimmten Komplexität des Systems wird es sich lohnen, einen Eingangsbearbeiter oder gar ein ganzes Team von Eingangsbearbeitern vorzusehen, deren Aufgabe es ist, ankommende Anfragen daraufhin zu prüfen, ob eine Bearbeitung durch einen Standard-Prozeß möglich ist und in Abhängigkeit vom Ergebnis dieser Prüfung die Anwendung des entsprechenden Standard-Prozesses zu veranlassen oder andernfalls diese Anfrage einem spezialisierten Bearbeiter oder gar einem Team von spezialisierten Bearbeitern zur weiteren Bearbeitung zuzuordnen. Diese Hierarchie kann man auch auf mehreren Ebenen anwenden, wenn die Komplexität des Gesamtprozesses dies sinnvoll erscheinen läßt.

Zur technischen Realisierung dieser Verfahrensabläufe sind die Bearbeiter (T1, ... T4) in geeigneter Weise, z.B. über ein Intranet (IN) mit der Datenbank (DB) zu vernetzen. Sämtliche HTML-Dokumente stehen sämtlichen in Betracht kommenden, d.h. potentiell zuständigen Bearbeitern oder sämtlichen Bearbeitern eines zuständigen Teams zur Einsicht und zur Bearbeitung zur Verfügung. Eine vollständig bearbeitete Anfrage kann entsprechend markiert, archiviert oder auch ganz gelöscht werden.

Ankommende Anfragen werden von einem im Hintergrund des Systems laufenden Prozeß automatisch in HTML-Dokumente umgewandelt und in die Datenbank integriert. Falls ein Eingangsbearbeiter vorgesehen ist, sichtet dieser die Dokumente und ordnet sie spezialisierten Bearbeitern zur weiteren Bearbeitung zu. Nun werden diese Anfragen für die ausgewählten spezialisierten Bearbeiter sichtbar. Auf diese Weise zeigt das System jedem Bearbeiter vorzugsweise nur diejenigen Anfragen als von ihm zu bearbeitende Anfragen an, für die er auch aufgrund seiner Spezialisierung zuständig ist. Dieser Mechanismus wird über entsprechende Datenbankeinträge realisiert, deren Inhalt das System zur selektiven Anzeige von Anfragen bzw. Datenbanksätzen in Abhängigkeit von der Zuständigkeit oder Spezialisierung der Bearbeiter verwendet.

Die Verwendung des HTML-Datenformats bringt für die Realisierung der vorliegenden Erfindung den Vorteil der Betriebssystem- und Hardware-Plattformunabhängigkeit, die gerade in regional verteilten oder globalen Netzen eine wesentliche Voraussetzung für die Bearbeitung der Anfragen durch dezentrale, nach fachlicher Spezialisierung besetzte, aber geographisch weit verteilte Bearbeiter-Teams ist. Aus dem gleichen Grund ist es vorteilhaft, diese HTML-Dokumente in einer Intranet-Datenbank den Bearbeitern über ein Intranet zur Verfügung zu stellen. Vor allem auf diese Weise kann die reibungslose Zusammenarbeit von Bearbeitern in unterschiedlichen Ländern mit unterschiedlichen Hardware-Ausstattungen innerhalb eines Teams garantiert werden.

## Patentansprüche

1. Verfahren zur Bearbeitung von Anfragen von Kunden, Kooperationspartnern, Mitarbeitern oder anderen Personen an Institutionen mit einer Vielzahl von für die Bearbeitung solcher Anfragen potentiell zuständigen Bearbeitern mit folgenden Schritten:
a) ankommende Anfragen werden, sofern sie nicht bereits in digitaler Form als E-Mail oder elektronisch gespeicherter Text vorliegen, digitalisiert und in digitaler Form gespeichert;
b) diese in digitaler Form gespeicherten Anfragen werden in Form einer elektronischen Datenbank möglichen Bearbeitern solcher Anfragen über ein Netz zur Verfügung gestellt;
c) nach der Bearbeitung einer Anfrage wird die Anfrage als bearbeitet markiert und bzw. oder beispielsweise archiviert oder gelöscht.

2. Verfahren nach Anspruch 1,
**dadurch gekennzeichnet,**
**daß** die ankommenden Anfragen durch einen Eingangsbearbeiter oder ein Team von Eingangsbearbeitern
a) daraufhin geprüft werden, ob eine Bearbeitung durch einen Standard-Prozeß möglich ist und bei dem in Abhängigkeit vom Ergebnis dieser Prüfung
b) die Bearbeitung einer solchen Anfrage durch einen Standard-Prozeß erfolgt, oder
c) diese Anfrage einem spezialisierten Bearbeiter oder einem Team von spezialisierten Bearbeitern zur weiteren Bearbeitung zugeordnet wird.

3. Verfahren nach einem der vorhergehenden Ansprüche,
**dadurch gekennzeichnet,**
**daß** der Bearbeitungszustand oder die Bearbeitungshistorie oder Informationen über Zuständigkeiten, Probleme, und ähnliche Informationen in der Datenbank zusammen mit der in digitaler Form gespeicherten Anfrage gespeichert werden können.

4. Verfahren nach einem der vorhergehenden Ansprüche, bei dem die Anfragen in Form von HTML-Dokumenten in einer Intranet-Datenbank gespeichert werden, und bei dem die Bearbeitung von Anfragen vorzugsweise durch Erzeugung und Versenden einer an den Anfragenden adressierten E-Mail erfolgt.

5. Verfahren nach einem der vorhergehenden Ansprüche,
**dadurch gekennzeichnet,**
**daß** ein privilegierter Bearbeiter oder ein Team von privilegierten Bearbeitern mit Hilfe der Datenbankfunktion des Verfahrens statistische Abfragen über den Bearbeitungszustand von Anfragen durchführen kann oder daß derartige statistische Abfragen automatisch aktualisiert und deren Ergebnisse privilegierten Bearbeitern zur Verfügung gestellt werden.
